Europäisches Patentamt

(19) European Patent Office

Office européen des brevets

(11) Numéro de publication: **0 061 378
B1**

(12) FASCICULE DE BREVET EUROPEEN

(45) Date de publication du fascicule du brevet:
06.02.85

(51) Int. Cl.⁴: **G 02 B 6/24**, G 02 B 6/02

(21) Numéro de dépôt: **82400390.9**

(22) Date de dépôt: **05.03.82**

(54) **Procédé de modification contrôlée des caractéristiques géométriques de l'extrémité d'une fibre optique monomode, et application au couplage optique.**

(30) Priorité: **17.03.81 FR 8105287**

(43) Date de publication de la demande:
**29.09.82 Bulletin 82/39**

(45) Mention de la délivrance du brevet:
**06.02.85 Bulletin 85/6**

(84) Etats contractants désignés:
**DE GB NL SE**

(56) Documents cités:
**US - A - 4 265 699**

**OPTICAL COMMUNICATION CONFERENCE, 17-19
septembre 1979, AMSTERDAM (NL), S. HOPLAND et al.:
"Fabrication of coupling fibres with spherical end faces
by a selective etching/melting technique", pages 9,3-1 -
9,3-4
IBM TECHNICAL DISCLOSURE BULLETIN, vol. 20, no. 3,
août 1977, NEW YORK (US), J.D. CROW et al.:
"Fabrication of lenses on tips of fibers", pages
1235-1236**

(73) Titulaire: **THOMSON-CSF, 173, Boulevard Haussmann,
F-75379 Paris Cedex 08 (FR)**

(72) Inventeur: **Kayoun, Pierre, THOMSON-CSF SCPI 173, bld
Haussmann, F-75360 Paris Cedex 08 (FR)**

(74) Mandataire: **Lepercque, Jean et al, THOMSON-CSF
SCPI 173, Bld Haussmann, F-75379 Paris Cedex 08 (FR)**

## Description

L'invention se rapporte à un procédé de modification contrôlée des caractéristiques géométriques de la face terminale d'une fibre optique monomode notamment en vue de réaliser un couplage optimisé avec un autre élément optique monomode, cet élément pouvant être indifféremment une autre fibre optique, un guide d'onde intégré ou un laser.

De tels dispositifs sont notamment utilisés dans les systèmes de liaisons optiques. Ces systèmes sont mis en oeuvre pour assurer des télécommunications par voie optique dans de nombreux domaines. A titre d'exemples non limitatifs, on peut citer les transmissions téléphoniques ou télex, la télématique ou la télédistribution.

Pour les transmissions sur de longues distances, des fibres optiques à très faibles pertes sont utilisées. Un soin particulier doit être apporté aux couplages entre fibres optiques d'une part, et d'autre part, entre les fibres optiques et les organes optoélectroniques d'émission et de détection de l'énergie radiante transmise par ces fibres optiques.

Comme il est connu, les liaisons peuvent être du type multimode ou monomode, ce dernier type autorisant des liaisons à plus fort débit et à plus faible atténuation sur de longue distance.

Pour ces applications, on s'efforce donc de constituer des systèmes optiques comprenant uniquement des éléments monomodes tels que des lasers semiconducteurs, des guides d'ondes intégrés ou des fibres optiques monomodes.

Un des problèmes fondamentaux qui se posent dans une chaîne de transmission monomode est celui du couplage entre les différents éléments monomodes, ce de façon plus aiguë que lorsque des éléments multimodes sont mis en jeu. En effet, dans chaque élément est excité un mode qui n'est pas nécessairement adapté à l'élément suivant de la chaîne. Aussi, afin de coupler un maximum d'énergie dans l'élément monomode aval, faut-il modifier et adapter le mode amont, ou l'inverse.

Un exemple de couplage particulièrement délicat à mettre en oeuvre est le couplage entre une source à rayonnement divergent, notamment un laser semiconducteur monomode transverse et une fibre optique-monomode. Le couplage direct, dans lequel la source et la fibre sont simplement placés face à face sans élément optique intermédiaire, a une faible efficacité en raison des dimensions réduites de la fibre et de l'ouverture, généralement grande, du faisceau laser. Afin d'augmenter cette efficacité, il a été étudié des configurations optiques diverses à base de cônes, de lentilles cylindriques, hémicylindriques ou sphériques, de lentilles hémisphériques. Des études théoriques et pratiques montrent que l'on peut obtenir des résultats intéressants avec une lentille hémisphérique accolée à l'extrémité de la fibre. Différentes méthodes de fabrication ont été proposées. Parmi celles-ci, le thermoformage, qui consiste à faire fondre l'extrémité de la fibre à l'aide d'un moyen quelconque, a été décrit notamment dans deux articles parus en 1975 dans la revue «Applied Optics»; Vol. 14, N° 2, pages 294-298 et Vol. 14, N° 12, pages 2815-2816. Cette technique nécessite souvent, surtout pour les fibres en silice couramment utilisées, des températures très élevées, donc un appareillage lourd.

Il est connu par ailleurs de faire précéder le traitement thermique de l'extrémité d'une fibre optique, pour la préparer, d'une attaque chimique différenciée des différentes régions constituant cette extrémité de fibre, coeur et gaine optique, réalisées en matériaux différemment dopés. Un tel procédé est décrit, par exemple, dans la publication «Optical Communication Conférence»; 17-19 septembre 1979; pages 9, 3-1 à 9, 3-4 (AMSTERDAM; Pays-Bas).

Une solution plus simple à ce problème a été décrite dans la demande de brevet français N° FR-A-2 465 238 et intitulée: «Dispositif de couplage entre une source lumineuse de rayonnement divergent et une fibre optique et procédé de réalisation d'un tel dispositif».

Cette demande de brevet vise la réalisation d'une lentille plan-convexe en verre de haut indice sur n'importe quel type de fibre. Le dispositif de couplage comprend une lentille plan-convexe accolée à la face d'entrée de la fibre, constituée d'un verre d'indice de réfraction supérieur à celui de la fibre et obtenue en mettant en contact l'extrémité de la fibre avec une goutte de verre en fusion. On obtient une calotte sphérique dont les paramètres sont contrôlables.

Bien que plus simple a mettre en oeuvre que les procédés antérieurement connus, ce procédé nécessite néanmoins la création d'un élément rapporté, étranger à la fibre: la lentille plan-convexe; et de géométrie défine une fois pour toute: demi-sphère.

Tout au contraire, l'invention propose un procédé pour l'élaboration d'un objet de phase sur la face terminale de la fibre qui reste simple à mettre en oeuvre tout en autorisant une souplesse accrue par rapports aux procédés de l'art connu. De plus ce procédé ne nécessite pas l'adjonction d'éléments extérieurs à la fibre, la modification apportée à la fibre pour l'élaboration dudit objet de phase s'effectuant de façon continûment contrôlable.

L'invention a donc pour objet un procédé de modification contrôlée des caractéristiques géométriques de l'extrémité d'une fibre optique monomode, la fibre étant constituée d'une région centrale et d'au moins une région périphérique, d'indices de réfraction optique différents, ces différences d'indices étant obtenues par l'incorporation à un matériau de base en pourcentage déterminé, d'au moins un matériau dopant; procédé principalement caractérisé en ce qu'il comprend les étapes suivantes:

a) préparation préalable de l'extrémité de ladite fibre de manière à obtenir une face terminale exempte d'éclats,

b) attaque chimique pendant un temps prédéterminé de l'extrémité de la fibre de manière à provoquer des vitesses différenciées de l'attaque desdits régions à pourcentages de dopage déterminés,

c) neutralisation de l'attaque chimique,

d) injection dans la fibre par l'autre extrémité d'une radiation optique guidée et contrôle de l'état de modification desdites caractéristiques géométriques de l'extrémité de la fibre par le relevé des variations du profil du champ lointain de ladite radiation rayonnée par cette extrémité attaquée,

e) comparaison de ce champ lointain avec un profil de référence avec lequel une corrélation la plus grande possible est recherchée,

f) dans le cas où le temps t n'a pas été suffisant, répétition des étapes b) à f).

L'invention a encore pour objet l'application de ce procédé de modification au couplage d'une fibre optique monomode avec un autre élément monomode.

L'invention sera mieux comprise et d'autres avantages apparaîtront à l'aide de la description qui suit, en référence aux figures annexées:

les figures 1 et 2 illustrent en coupe une fibre optique monomode et le diagramme représentant le profil d'indice de refraction optique d'une telle fibre,

les figures 3 et 4 illustrent un exemple de modification des caractéristiques géométriques de l'extrémité d'une fibre obtenues par le procédé de l'invention,

les figures 5 à 7 illustrent des dispositifs de mesure particuliers mis en oeuvre dans le procédé de l'invention,

les figures 8 à 10 sont des diagrammes illustrant les variations du champ lointain de la fibre optique modifiée par le procédé de l'invention,

la figure 11 est un diagramme illustrant le champ lointain d'un émetteur laser semi-conducteur,

la figure 12 est un diagramme illustrant l'efficacité du couplage entre deux éléments optiques monomodes en fonction de la distance les séparant.

Avant de décrire le procédé de l'invention, il est tout d'abord utile de rappeler brièvement les principales caractéristiques des fibres optiques et la manière dont sont obtenues ces fibres.

Un des procédés de fabrication de fibres optiques les plus utilisés est connu sous l'abrévation «MCVD» (de l'expression anglo-saxonne: «modified chemical vapor-phase deposition» qui peut se traduire par procédé modifié de dépôt chimique par voie gazeuse). Ce procédé consiste à faire circuler à l'intérieur d'un tube en silice un mélange gazeux comprenant notamment de l'oxygène et des composés de silicium, de germanium ou de bore, ces derniers étant introduits à l'intérieur du tube selon des séquences prédéterminées. Le tube est chauffé à l'aide d'une source de chaleur que l'on déplace suivant une direction longitudinale à ce tube. Le cycle est recommencé plusieurs fois. A chaque passage dans les zones échauffées, il se réalise une réaction d'oxydo-réduction des composants en présence et le dépôt des oxydes de silicium, de bore ou de germanium sur la paroi interne. A chaque passage du tube devant la source de chaleur, une nouvelle couche se dépose.

On effectue ensuite une étape ultime consistant à chauffer très fortement le tube en silice. Il s'en suit une contraction (connûe plus couramment sous l'expression anglo-saxonne «collapsing»). Le produit obtenu est appelé préforme et se présente sous la forme d'un barreau de dimensions extérieures typiquement de l'ordre de 9 mm. Cette préforme va servir à la fabrication des fibres optiques proprement dites, qui seront obtenues par tréfilage de cette préforme. Après cette phase finale, la fibre aura un diamètre extérieur d'environ 125 $\mu$m.

Comme il est connu, une fibre optique comporte un coeur, une gaine optique, un tube support et une gaine se différenciant essentiellement par leur indice de réfraction optique. L'évolution de cet indice de réfraction optique doit s'effectuer selon un profil déterminé. Pour arriver à ce résultat, il est nécessaire de déposer sur la face interne tu tube originel des matériaux différents de façon à ce que l'indice de réfraction optique varie selon un profil homothérique à celui désiré pour la fibre optique. A titre d'exemple, l'indice moyen de réfraction étant celui de la silice, c'est-à-dire celui du tube, si on désire augmenter l'indice de réfraction on peut introduire, dans un pourcentage déterminé, du dioxyde de germanium.

Après tréfilage, la fibre optique sera constituée le plus souvent des deux régions, coeur et gaine optique, d'un tube support constitué par le matériau du tube initial et d'une gaine de protection extérieure disposée autour de ce tube support dans une phase de fabrication ultérieure.

Il existe deux type de fibres:

des fibres optiques du type dit multimode, pour lesquelles le diamètre de coeur est typiquement de 50 $\mu$m et le diamètre extérieur de la gaine optique est de 70 $\mu$m;

des fibres du type dit monomode, pour lesquelles le diamètre de coeur est compris entre 5 et 10 $\mu$m et le diamètre extérieur de la gaine optique est d'environ 40 $\mu$m.

Le diamètre extérieur du tube support, le plus souvent en silice pure, est d'environ 125 $\mu$m et le diamètre extérieur de la gaine de protection, en silicone par exemple, est de l'ordre de 300 $\mu$m.

Les fibres peuvent être à saut d'indice ou à gradient d'indice.

L'invention est concernée par les fibres du type monomode.

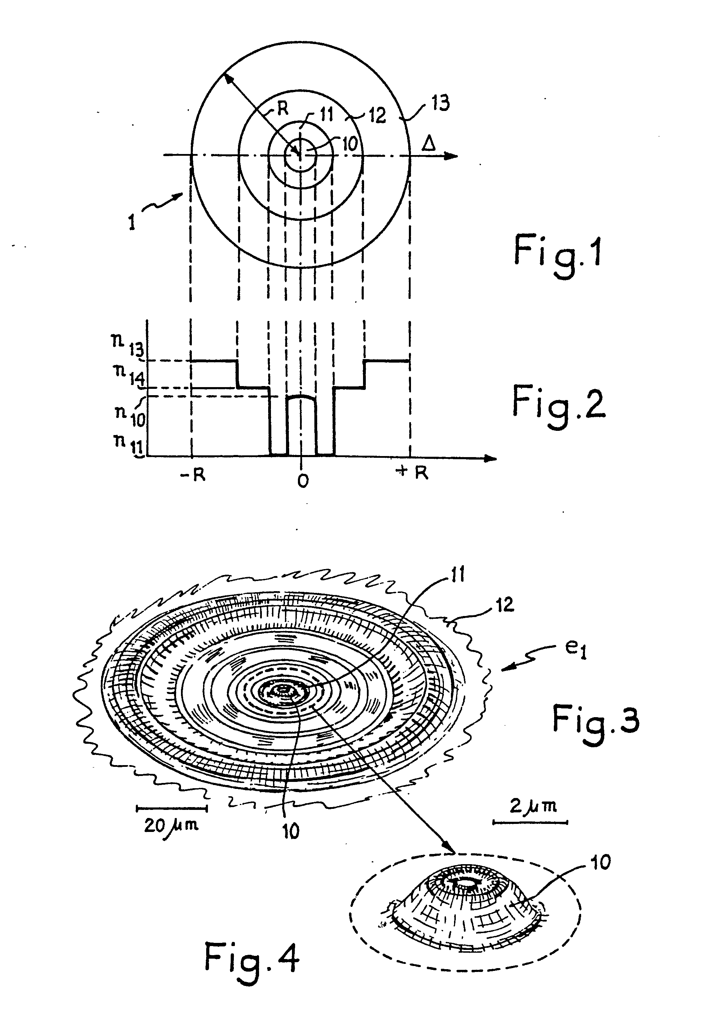

La figure 1 représente en section une fibre optique. R est le rayon extérieur de la fibre. On a présenté sur la figure 1 les différentes régions: coeur 10, gaine optique 12 et gaine de protection 13.

La figure 2 représente un exemple parmi d'autres de profil d'indice d'une fibre optique pouvant être mise en oeuvre dans l'invention. Le profil représente les variations d'indice suivant un axe $\triangle$ passant par le centre de la fibre.

Dans le cadre de l'exemple choisi, le coeur 10 est en silice très légèrement dopée. Le dopage n'est pas uniforme de manière à obtenir une variation d'indice en forme de cloche de valeur maximale $n_{10}$. La gaine optique 11 d'indice $n_{11}$ est en silice dopée au bore, le matériau de dopage comprenant également des traces de phosphore. Le tube support 12 est en silice pure d'indice $n_{12}$, légèrement supérieur à $n_{10}$. Enfin la gaine de protection 13 est epoxy d'indice $n_{13}$.

La relation suivante: $n_{13} > n_{12} > n_{10} > n_{11}$ est vérifiée.

D'autres fibres optiques possédant des profils d'indice de réfraction optiques entièrement différent de celui illustré par la figure 2 sont naturellement utilisables dans le cadre de l'invention, cet exemple n'ayant pour but que de présenter un exemple de réalisation concrète.

Comme il a été précédemment rappelé, pour obtenir un couplage optimisé entre deux éléments optiques monomodes, il est nécessaire de modifier le mode d'un de ces éléments. S'il s'agit, par exemple, du couplage d'une fibre optique monomode avec un émetteur d'énergie radiante du type laser semi-conducteur, il paraît exclus de pouvoir modifier simplement le mode d'émission de ce laser. Il est alors nécessaire de modifier la géométrie de la face terminale de la fibre optique, c'est-à-dire plus particulièrement du dioptre que forme la structure guidante, le coeur, avec le milieu extérieur, généralement l'air ambiant.

Dans l'art connu, comme il a été également rappelé, une des solutions retenues pour augmenter l'efficacité du couplage est de créer une lentille demisphérique à l'extrémité de la fibre. Cependant ce procédé manque de souplesse.

Les modifications du mode guidé à proximité de l'extrémité de la fibre qui résultent de cette disposition ne sont pas en effet également intéressante pour toutes les sortes de couplages mis en jeu dans une chaîne de transmissions optiques à éléments monomodes.

L'invention tire profit du fait que les variations d'indices le long de l'axe $\triangle$ (fig. 1) sont obtenus par le dopage sélectif des régions de la fibre à l'aide de différents matériaux, ce dans des proportions déterminées. Si on soumet l'extrémité d'une fibre à une attaque chimique, il s'en suit que la vitesse d'attaque de ces régions varie également en fonction de la nature et de la concentration des matériaux de dopage ainsi que du produit utilisé pour l'attaque chimique et sa concentration. Cela a pour conséquence que la géométrie de l'extrémité de la fibre optique évolue concurremment. Cela a enfin pour effet de modifier le mode guidé dans cette zone.

Il subsiste cependant une difficulté: c'est de pouvoir effectivement contrôler cette modification à proximité de la face terminale de la fibre, vues les dimensions de celle-ci typiquement 125 $\mu$m de diamètre pour le tube support 3.

Pour obvier cette difficulté, on injecte dans la fibre une radiation, à l'aide d'un émetteur laser par exemple, et on étudie la propagation de ce mode dans l'espace libre en sortie de la fibre à l'extrémité ayant subie l'attaque chimique, c'est-à-dire la répartition de l'intensité du rayonnement émis en champ lointain ou région de Fraunhofer.

Cette région est située, comme il est connu pour une structure rayonnante de dimension D, à une distance supérieure ou égale à 2D$^2$/$\lambda$ de cette source; $\lambda$ étant la longueur d'onde. Dans le cas d'une fibre optique alimentée par un émetteur laser, il suffit de se placer à quelques dizaines de micromètres pour satisfaire cette condition. En outre, dans le cas général l'extrémité de la fibre étant de révolution, il suffit d'étudier le champ lointain dans un seul plan contenant l'axe de la fibre.

L'évolution du champ lointain est représentative du champ proche car il existe une relation biunivoque entre ces deux champs. Des considérations théoriques permettent de passer de l'un à l'autre à l'aide de la transformée de Fourier.

L'attaque chimique contrôlable revient donc en dernier lieu, si on se reporte à ce qui a été décrit antérieurement, à modifier le champ lointain de façon également contrôlable.

Selon le procédé de l'invention, les modifications peuvent avoir pour effet de satisfaire différents critères et par là ajouter une souplesse que ne pouvaient offrir les procédés de l'art connu.

Selon une première variante, on peut modifier le champ lointain d'une fibre optique monomode pour le faire ressembler à celui de l'élément monomode dans lequel on cherche à coupler la lumière, par exemple à celui d'un laser semi-conducteur dont il est difficile de modifier son propre champ lointain.

Cette adaptation de champs lointains est équivalente à une adaptation des modes et permet donc d'augmenter l'efficacité du couplage entre la fibre et l'autre élément monomode.

Selon une seconde variante, la modification assure également un couplage maximum mais ce lorsque les deux éléments ne sont pas en contact ou a proximité immédiate l'un de l'autre, ce qui est d'un grand intérêt pratique: possibilité d'insérer un élément optique tel que atténuateur, polariseur, modulateur, etc. dans le chaîne de transmission.

Le procédé de l'invention va maintenant être décrit avec plus de détails. Il comprend les étapes suivantes:

1 - réalisation dans un premier temps d'une bonne cassure par clivage ou tout autre procédé de l'art connu de l'extrémité de la fibre optique monomode pour obtenir une face sans éclat. On peut vérifier le résultat de l'opération à l'aide d'un microscope;

2 - nettoyage de l'extrémité de la fibre, avec de l'alcool par exemple;

3 - trempage de cette extrémité dans une solution d'acide pendant un temps t déterminé;

4 - nettoyage à l'eau et à l'alcool de l'extrémité de la fibre pour neutraliser l'attaque;

5 - relevé du profil du champ lointain diffracté par l'extrémité de la fibre;

6 - comparaison de ce champ lointain avec un profil à obtenir, ou du moins avec un profil avec lequel on doit obtenir une correlation la plus grande possible.

Les étapes 3 à 6 peuvent être effectuée de façon itératives, jusqu'à obtention du résultat escompté à l'étape 6, ce dans le cas où des considérations théoriques ou expérimentales ne permettent pas de définir à l'avance le temps t déterminé.

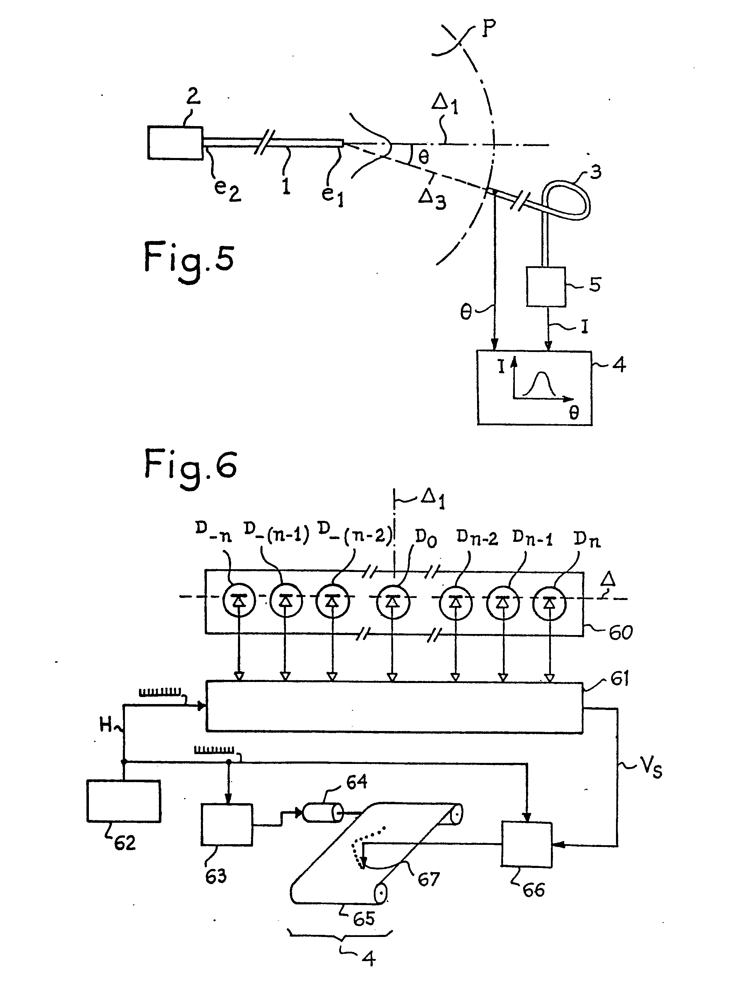

Enfin dans la seconde variante du procédé, si l'on désire obtenir une efficacité de couplage déterminée lorsque les deux éléments à coupler sont placés à une distance préétablie l'un de l'autre, l'étape N° 6 telle que précédemment définie peut être remplacée par l'étape suivante: on place les deux éléments l'un par rapport à l'autre à cette distance préétablie et on mesure l'efficacité du couplage. Un exemple de mise en oeuvre du procédé sera décrit dans ce qui suit en relation avec la figure 6.

Pour fixer les idées, dans ce qui suit, le couplage d'un émetteur laser semi-conducteur avec une fibre monomode va être considéré. Les principales caractéristiques de ces deux éléments sont rassemblées dans le tableau ci-dessous:

fibre: diamètre coeur 5 $\mu$m
matériau du coeur: silice légèrement dopée
gaine optique: dopée principalement au bore
profil d'indice: selon la figure 2

laser: type As Ga
longueur d'onde $\lambda$ = 0,83 $\mu$m
dimensions de la cavité: 0,2 $\times$ 4 $\times$ 300 (en $\mu$m)

Dans ces conditions, la solution d'acide de l'étape N° 3 peut être une solution d'acide fluorhydrique à 40%. Les étapes 1, 2 et 4 mettent en oeuvre des techniques bien connues dans le domaine de fibre optiques et ne nécessitent pas de plus amples développements.

En ce qui concerne l'étape N° 3, la figure 5 représente schématiquement un dispositif permettant de relever le champ lointain de la fibre monomode 1 dont on a attaqué l'extrémité $e_1$.

On injecte dans la fibre par l'extrémité $e_2$ de l'énergie radiante produite par une source laser 2, qui peut être la source laser à coupler ou une source du même type. On relève le profil du champ lointain de la fibre 1 à l'aide d'une fibre auxiliaire de détection 3 dans un plan P contenant l'axe de symétrie $\triangle_1$ de la fibre 1. Ce plan peut être un support sur lequel la source 2 et la fibre 1 ont été placées. La fibre de détection peut être rendue solidaire d'un chariot se déplaçant sur un arc de cercle de centre confondu avec la face de sortie $e_1$ de la fibre 1. Un organe de mesure (non illustré sur la figure 5) de l'angle $\theta$ que fait l'axe de symétrie $\triangle_3$ de la fibre 3 avec l'axe de symétrie de la fibre 1 génère un signal électrique de commande, par exemple une tension de commande, d'amplitude proportionnelle à l'angle $\theta$, qui est transmise à l'une des entrées de commande d'une table traçante 4.

L'intensité lumineuse recueillie par la fibre de détection 3 est mesurée à l'aide d'un organe photodétecteur 5, par exemple un photomultiplicateur, qui convertit cette intensité en un signal électrique I transmis à l'autre entrée de commande de la table traçante 4.

On peut ainsi relever la carte du champ lointain de la fibre 1, ce après chaque cycle d'attaque.

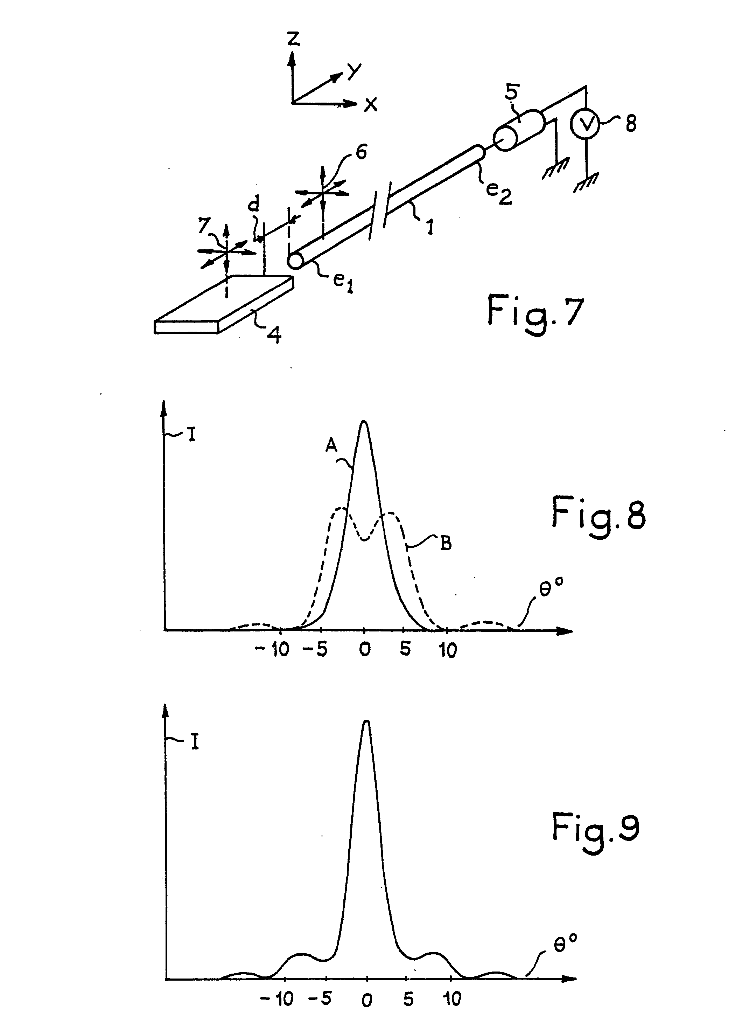

Les figures 8 à 10 fournissent un exemple expérimental de relevés représentant l'évolution du champ lointain en fonction du temps d'attaque t, la concentration de la solution acide restant constante. L'ordonnée représente l'intensité optique relative et l'abscisse, l'angle $\theta$ en degrés.

Sur le diagramme de la figure 8, la courbe A représentant le profil du champ lointain de la fibre 1 avant attaque chimique et la courbe B après 1 min environ d'attaque. On constate un très net élargissement de la courbe B.

Les courbes 9 et 10 représentent les profils du champ lointain après respectivement 3 et 15 min d'attaque chimique.

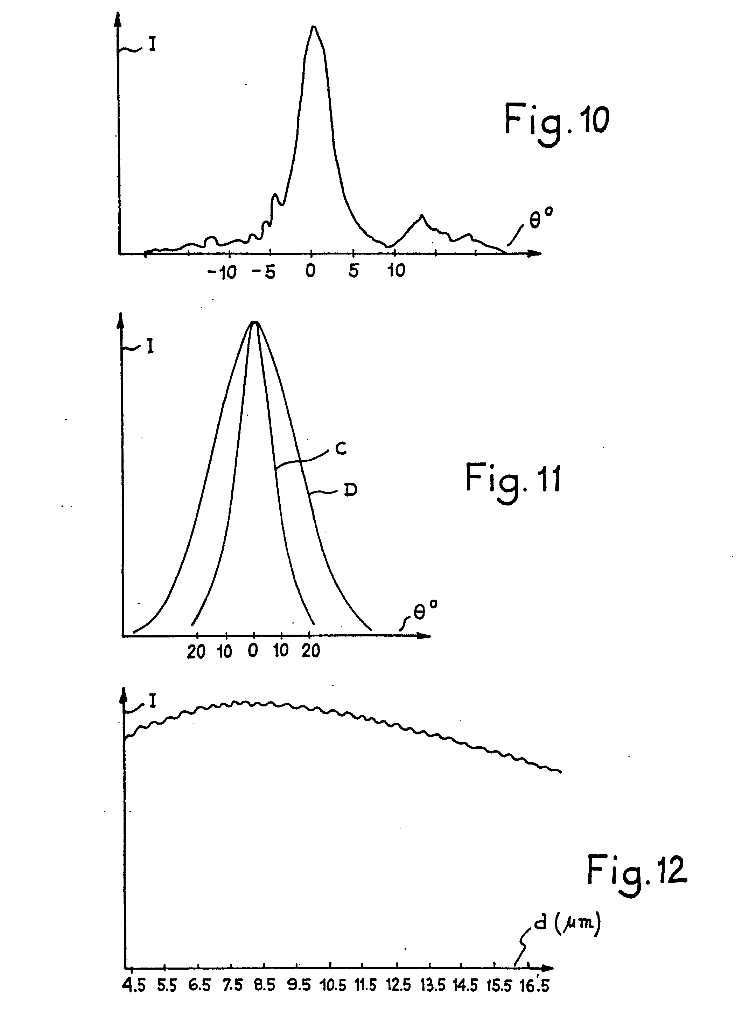

La figure 11 représente le profil du champ lointain du laser à coupler. On sait que le diagramme de rayonnement des lasers semi-conducteur n'est pas de révolution mais inscrit dans une courbe qui se rapproche de l'ellipse. Sur la figure 11 ont été représentés les profils extrema correspondant respectivement, pour la courbe C, au plan parallèle à la fonction formant le laser et au plan orthogonal à cette fonction pour la courbe D.

On constate qu'un temps d'attaque correspondant à 1 min environ (fig. 8: courbe B) maximise l'intégrale de recouvrement des champs lointains de la fibre 1 et du laser à coupler 2. Ensuite les courbes se rétrécissent à nouveau (figures 9 et 10). Dans l'exemple choisi, le temps de 1 min sera retenu, ce naturellement pour la solution d'acide fluorhydrique à 40%

Les figures 3 et 4 illustrent schématiquement l'état de l'extrémité $e_1$ de la fibre 1 après ce temps d'attaque. Il se forme une cuvette dans la région constituée par la gaine optique 11. Le coeur 10 de la fibre se présente sous la forme d'un monticule en forme de dôme émergeant au fond de la cuvette.

Les échelles sont portées sur les figures 3 et 4, cette dernière représentant la partie centrale (coeur 10) de l'extrémité $e_1$ agrandie.

Il est possible d'automatiser la mesure du champ lointain en remplaçant l'ensemble fibre détectrice 3 et photomultiplicateur 5 par une barrette de détecteurs, par exemple une barrette de photodiodes. Il est en effet possible, si on se place suffisamment loin de l'extrémité $e_1$ de la fibre 1, d'effectuer les mesures dans un plan perpendiculaire à l'axe $\triangle_1$.

La figure 6 représente cette variante d'exécution du dispositif de mesure du champ lointain ainsi que les principaux circuits nécessaires à la mise en oeuvre de cette variante.

La barette de diodes 60 comprend $(2n + 1)$ diodes: $D_{-n}...D_o...D_n$ reparties sur un axe $\triangle$ perpendiculaire à l'axe $\triangle_1$; la diode $D_o$ étant centrée sur l'axe $\triangle_1$. La distance entre deux diodes successives représente une variation élémentaire de l'angle $\theta$.

Les sorties des photodiodes $D_{-n}$ à $D_n$ sont transmises à un multiplexeur analogique 61. De tels multiplexeurs sont couramment disponibles dans le commerce et comprennent notamment une série de portes analogiques recevant, sur une première entrée, les signaux à multiplexer, dans le cadre de l'invention les signaux de sortie des photodiodes $D_{-n}$ à $D_n$ et, sur une seconde entrée, des signaux binaires d'autorisation. Le multiplexeur reçoit pour ce faire des signaux d'horloge H produits par un générateur 62, ces signaux étant transmis, par exemple, à un compteur binaire rebouclé compris dans le multiplexeur 60 ayant autant d'état binaire que de signaux différents à multiplexer : $(2n + 1)$ dans le cadre de l'invention. Des circuits logiques, également propres au multiplexeur 60, sélectionnent un de ces états binaires de manière que, à chaque instant, une seule sortie de photodiode soit sélectionnée et transmise à une sortie commune du multiplexeur analogique 60 : $V_s$.

Ce signal de sortie est transmis à une des entrées d'un circuit 66 de commande du stylet 67 d'une table traçante 4. Ce circuit peut recevoir sur une autre entrée les signaux d'horloges H utilisés comme signaux d'autorisation et d'échantillonnage pour la commande du style 67 point par point en synchronisme avec le balayage des sorties de photodiodes $D_{-n}$ à $D_n$.

Les signaux d'horloge H sont également transmis à un circuit 63 de commande d'un moteur pas à pas 64 entraînant le support d'inscription 65 de la table traçante.

Ce support peut être gradué en valeur d'angle $\theta$ en abscisse, et en valeur d'intensité optique relative I. Comme il est bien connu, le circuit 66 de commande comportent des organes de calibrage, d'adaptation et d'amplification de signaux qui sortent du cadre de l'invention.

Il est d'ailleurs possible d'utiliser d'autres types d'appareils de visualisation, tels que par exemple un oscilloscope à rémanence. On peut encore utiliser une caméra de télévision comme élément détecteur.

Selon un second aspect de l'invention qui a été rappelé, il est possible d'obtenir un couplage maximum lorsque les deux éléments optiques monomodes sont placés l'un par rapport à l'autre à une distance préétablie.

La figure 7 illustre un dispositif permettant de déterminer le temps d'attaque de l'extrémité $e_1$ de la fibre 1 nécessaire pour obtenir un couplage maximum pour une distance préétablie d. Après l'étape N° 4 du procédé de l'invention, l'extrémité $e_1$ de la fibre 1 et le laser 4 à coupler sont rendus mécaniquement solidaires respectivement des micromanipulateurs 6 et 7, les faces terminales des deux éléments étant séparées l'une de l'autre de la distance préétablie d. A l'aide de ces deux micromanipulateurs pouvant effectuer des déplacements parallèlement aux trois axes d'un trièdre de référence X Y Z, on déplace les deux éléments à coupler l'un par rapport à l'autre jusqu'à obtention d'un couplage maximum. Ce couplage peut être déterminé en plaçant à l'extrémité $e_2$ de la fibre 1 un organe optoélectronique 5, par exemple un photomultiplicateur ou une photodiode, détectant l'intensité optique des radiations transmises par la fibre 1 et convertie en un signal électrique mesuré par tout appareil 8 approprié. Le temps d'attaque t nécessaire peut être de cette façon optimisé.

Dans tous les cas le dispositif qui vient d'être décrit peut être utilisé dans une phase finale pour réaliser le couplage effectif et maximum des deux éléments à coupler. Par exemple dans la variante décrite en relation avec les figures 5 et 6, lorsque le profil de champ lointain désiré est obtenu (étape N° 6 du procédé) les deux éléments à coupler sont rendus solidaires des micromanipulateurs 6 et 7 et, notamment, la distance de séparation d entre les deux éléments est ajustée jusqu'à l'obtention du couplage maximum. Les deux éléments sont ensuites fixés dans cette position par tout procédé connu: scellement, collage etc.

Dans le cadre de l'exemple choisi, la figure 12 illustre les variations de l'efficacité du couplage, représentée par l'intensité relative I mesurée par le détecteur 5, en fonction de la distance en micromètres séparant les faces terminales du laser 4 à coupler avec la fibre 1. Il ressort clairement de la courbe que le maximum se situe aux alentours de d = 8 $\mu$m, une valeur plus élevée (10 $\mu$m par exemple) pouvant être sélectionnée avec une efficacité de couplage restant élevée.

Les fluctuations de la courbe représentent un phénomène parasite dû à «l'effet de cavité Perot-Fabry». Cependant, et c'est un avantage supplémentaire, du fait que la surface de la face terminale de la fibre après attaque selon le procédé de l'invention n'est plus plane, cet effet parasite est diminué de façon significative: de 5 à 20% selon l'état de surface atteint après l'attaque chimique.

Toujours dans le cadre de l'exemple considéré, l'efficacité de couplage atteint typiquement 35%, alors que pour un laser et une fibre non traitée identique, elle n'est que de 10%. On a donc, à l'aide du procédé de l'invention, augmenté considérablement l'efficacité du couplage.

De plus, les 10% d'efficacité ne peuvent être obtenus qu'en mettant en regard, le plus près possible, la fibre non traitée et le laser semi-conducteur. Théoriquement, le maximums d'efficacité est en effet obtenu quand on met les éléments en contact mais, sous peine de détérioration, on ne peut descendre au-dessous d'une distance de quelques microns. En revanche, avec le procédé de l'invention, l'efficacité du couplage est maximale non pas au contact mais lorsque les éléments sont distants typiquement d'une dizaine de micromètres.

Jusqu'à ce point de la description du procédé de l'invention, il a été admis que l'attaque chimique produit des effets symétriques si on se place dans un plan orthogonal à l'axe de symétrie de la fibre à traiter 1. Ceci se réalise effectivement du fait de la symétrie de révolution de la fibre 1.

Cependant, il peut être intéressant, pour certains applications, d'obtenir un champ lointain dont le profil ne possède pas cette symétrie de révolution.

Si on se reporte de nouveau à la figure 11, il est clair que le couplage de la fibre 1 avec le laser 4 peut être encore amélioré si le profil du champ lointain se rapproche de celui du laser quelque soit la direction considérée dans un plan orthogonal à l'axe de la fibre (figure 5: $\triangle_1$). Sur la figure 11, les courbes C et D représentent les profils suivant deux axes orthogonaux.

On peut également désirer un couplage maximum lorsque les axes de symétrie des deux éléments à coupler font entre eux un angle déterminé.

La condition énoncée dans ce qui précède peut être réalisée en partant d'une fibre dont au moins l'extrémité à modifier par attaque chimique selon le procédé de l'invention a été préalablement traitée, par exemple au stade de la fabrication, pour ne pas présenter de symétrie de révolution.

On peut encore pendant l'étape N° 1 du procédé au moment de la cassure, préparer une face terminale présentant un angle avec l'axe optique différent de $\pi/2$ radians.

Dans ce cas, contrairement à ce qui a été suggéré jusqu'à présent, le profil du champ lointain doit être relevé dans tout l'espace, ou au moins dans certains plans privilégiés, et non plus dans un seul plan (figure 5: plan P) puisque l'extrémité de la fibre et les modifications géométriques apportées par le procédé de l'invention ne présentent plus les propriétés de symétrie de révolution. Dans la majorité des applications, on peut se contenter de relever les profils de champ lointain dans deux plans correspondant aux extrema de façon analogue à ce qui a été illustré par la figure 11.

**Revendications**

1. Procédé de modification contrôlée des caractéristiques géométriques de l'extrémité ($e_1$) d'une fibre optique monomode (1), la fibre étant constituée d'une région centrale (10) et d'au moins une région périphérique (11-13) d'indices de réfraction optique différents ($n_{10}$-$n_{13}$), ces différences d'indices étant obtenues par l'incorporation à un matériau de base en pourcentage déterminé, d'au moins un matériau dopant; procédé caractérisé en ce qu'il comprend les étapes suivantes:

a) préparation préalable de l'extrémité ($e_1$) de ladite fibre de manière à obtenir une face terminale exempte d'éclats,

b) attaque chimique pendant un temps prédéterminé de l'extrémité de la fibre de manière à provoquer des vitesses différenciées de l'attaque desdits régions à pourcentages de dopage déterminés,

c) neutralisation de l'attaque chimique,

d) injection dans la fibre par l'autre extrémité d'une radiation optique guidée et contrôle de l'état de modification desdites caractéristiques géométriques de l'extrémité de la fibre par le relevé des variations du profil du champ lointain de ladite radiation rayonnée par cette extrémité attaquée ($e_1$),

e) comparaison de ce champ lointain avec un profil de référence avec lequel une corrélation la plus grande possible est recherchée,

f) dans le cas où le temps t n'a pas été suffisant, répétition des étapes b) à f).

2. Procédé selon la revendication 1, caractérisé en ce que, la fibre optique (1) étant de symétrie autour d'un axe de révolution ($\triangle_1$), pendant l'étape de préparation préalable de l'extrémité ($e_1$) de la fibre (1), la face terminale de cette extrémité est cassée en biais pour présenter un angle différent de $\pi/2$ radians avec l'axe de symétrie ($\triangle_1$) de manière à détruire la symétrie de révolution de ladite modification contrôlée des caractéristiques géometriques.

3. Procédé selon l'une quelconque des revendications 1 ou 2, caractérisé en ce que le profil du champ lointain est comparé au profil de référence pour déterminer l'intégrale de recouvrement des deux profils et en ce que les étapes d'attaque chimique, de neutralisation, de relevé du champ lointain et de comparaison sont répétées de façon itérative jusqu'à ce que l'intégrale de recouvrement de ces deux profils atteigne un maximum.

4. Procédé selon l'une quelconque des revendications 1 à 3, caractérisé en ce que, le matériau de base étant en silice et le matériau dopant principal du bore, l'attaque chimique est effectuée à l'aide d'une solution d'acide fluorhydrique dilué à 40% et en ce que la neutralisation de l'attaque s'effectue par nettoyage à l'aide d'une solution d'eau et d'alcool.

5. Procédé selon l'une quelconque des revendications 1 à 4, caractérisé en ce que le relevé du champ lointain est effectué par la mesure de l'intensité optique (I) de ladite radiation rayonnée par l'extrémité attaquée ($e_1$) à l'aide d'un détecteur optoélectronique (5).

6. Procédé selon la revendication 5, caractérisé en ce que le détecteur optoélectronique est une barette (60) de photodiodes ($D_{-n}$-$D_n$) également espacées.

7. Procédé de couplage d'une fibre optique monomode (1) avec un autre élément optique monomode (2) dont le profil du champ lointain est connu, caractérisé en ce que l'extrémité($e_1$) à coupler de la fibre (1) est modifiée par le procédé de l'un quelconque des revendications 1 à 6 et que le profil du champ lointain de la fibre (B) est comparé à celui (C, D) dudit élément monomode à coupler de manière à adapter ces deux profils.

8. Procédé de couplage d'une fibre optique monomode avec un autre élément optique monomode, caractérisé en ce qu'il comprend au moins une première phase pendant laquelle l'extrémité ($e_1$) à coupler de la fibre (1) est modifiée selon les étapes a) à d) du procédé de l'une quelconque des revendications 1 à 6 et une seconde phase pendant laquelle la fibre optique monomode (1) et l'autre élément optique monomode (2) sont déplacés dans l'espace l'une par rapport à l'autre pour obtenir un couplage optique maximum, l'efficacité de ce couplage est mesurée (5, 8).

9. Procédé selon la revendication 8, caractérisé en ce que la fibre optique monomode (1) et ledit autre élément optique monomode (2) sont en outre placés l'un par rapport à l'autre à une distance fixe préétablie (d).

10. Procédé selon l'une quelconque des revendications 8 ou 9, caractérisé en ce que les première et seconde phases sont répétées de façon itérative jusqu'à l'obtention d'une efficacité de couplage optique maximale.

11. Procédé selon l'une quelconque des revendications 7 à 10, caractérisé en ce que l'autre élément optique monomode (2) est un laser semi-conducteur.

**Patentansprüche**

1. Verfahren zur gesteuerten Veränderung der geometrischen Eigenschaften des Endes ($e_1$) einer optischen Monomodefaser (1), wobei die Faser aus einem zentralen Bereich (10) und wenigstens einem Umfangsbereich (11-13) mit verschiedenen optischen Brechungsindizes ($n_{10}$-$n_{13}$) gebildet ist, wobei diese Brechungsindexunterschiede dadurch erhalten werden, dass einem Basismaterial mit bestimmtem Prozentsatz wenigstens ein Dotierungsmittel einverleibt wird, wobei das Verfahren darin besteht, dass es folgende Schritte umfasst:

a) vorausgehende Zubereitung des Endes ($e_1$) der genannten Faser derart, dass eine splitterfreie Endfläche erhalten wird,

b) chemisches Angreifen des Endes der Faser während einer vorbestimmten Zeit in solcher Weise, dass differenzierte Geschwindigkeiten des Angriffs dieser Bereiche mit bestimmten Dotierungsprozentsätzen verursacht werden,

c) Neutralisation des chemischen Angriffs,

d) Einspeisung einer geführten optischen Strahlung in die Faser an ihrem anderen Ende und Kontrolle des Zustands der Veränderung der genannten geometrischen Eigenschaften des Endes der Faser durch Feststellung der Änderungen des Profils des Fernfeldes der aus diesem angegriffenen Ende ($e_1$) abgestrahlten Strahlung,

e) Vergleichen dieses Fernfeldes mit einem Referenzprofil, mit dem die grösstmögliche Korrelation angestrebt wird,

f) Wiederholung der Schritte b) bis f), falls die Zeit t nicht ausreiche.

2. Verfahren nach Anspruch 1, dadurch gekennzeichnet, dass bei symmetrischer optischer Faser (1) in bezug auf eine Umdrehungsachse ($\triangle_1$), während des Schrittes der vorausgehenden Zubereitung des Endes ($e_1$) der Faser (1) die Endfläche an diesem Ende schräg abgebrochen wird, um einen

von $\pi/2$ Radien verschiedenen Winkel mit der Symmetrieachse ($\triangle_1$) zu bilden, so dass die Rotationssymmetrie der genannten gesteuerten Veränderung der geometrischen Eigenschaften zerstört wird.

3. Verfahren nach Anspruch 1 oder 2, dadurch gekennzeichnet, dass das Fernfeldprofil mit dem Referenzprofil verglichen wird, um das Überdeckungsintegral der beiden Profile zu bestimmen, und dass die Schritte des chemischen Angriffs, der Neutralisierung, der Feststellung des Fernfeldes und des Vergleichens iterativ wiederholt werden, bis das Überdeckungsintegral dieser zwei Profile ein Maximum erreicht.

4. Verfahren nach einem der Ansprüche 1 bis 3, dadurch gekennzeichnet, dass bei einem Basismaterial aus Siliziumdioxid und dem Hauptdotiermittel Bor der chemische Angriff durch eine auf 40% verdünnte Fluorwasserstoffsäure erfolgt und dass die Neutralisierung des Angriffs durch Reinigung mittels einer Lösung aus Wasser und Alkohol erfolgt.

5. Verfahren nach einem der Ansprüche 1 bis 7, dadurch gekennzeichnet, dass die Feststellung des Fernfeldes durch die Messung der optischen Intensität (I) der genannten, von dem angegriffenen Ende ($e_1$) abgegebenen Strahlung mittels eines optoelektronischen Detektors (5) erfolgt.

6. Verfahren nach Anspruch 5, dadurch gekennzeichnet, dass der optoelektronische Detektor eine Zeile (60) aus Photodioden ($D_{-n}$-$D_n$) ist, die gleichmässig beabstandet sind.

7. Verfahren zum Koppeln einer optischen Monomodefaser (1) mit einem weiteren optischen Monomodeelement (2), dessen Fernfeldprofil bekannt ist, dadurch gekennzeichnet, dass das anzukoppelnde Ende ($e_1$) der Faser (1) durch das Verfahren nach einem der Ansprüche 1 bis 6 verändert wird und dass das Profil des Fernfeldes der Faser (B) mit dem (C, D) des anzukoppelnden Monomodeelements verglichen wird, so dass diese zwei Profile aneinander angepasst werden.

8. Verfahren zur Kopplung einer optischen Monomodefaser mit einem anderen optischen Monomodeelement, dadurch gekennzeichnet, dass es wenigstens eine erste Phase umfasst, während welcher das anzukoppelnde Ende ($e_1$) der Faser (1) gemäss den Schritten a) bis d) des Verfahrens nach einem der Ansprüche 1 bis 6 verändert wird, und eine zweite Phase enthält, während welcher die optische Monomodefaser (1) und das andere optische Monomodeelement (2) im Raume bezüglich einander verschoben werden, um eine maximale optische Kopplung zu erhalten, wobei die Wirksamkeit der Kopplung gemessen wird (5, 8).

9. Verfahren nach Anspruch 8, dadurch gekennzeichnet, dass die optische Monomodefaser (1) und das andere optische Monomodeelement (2) ferner voneinander um einen fest vorbestimmten Abstand (d) entfernt angeordnet werden.

10. Verfahren nach Anspruch 8 oder 9, dadurch gekennzeichnet, dass die erste und die zweite Phase iterativ wiederholt werden, bis eine maximale optische Wirksamkeit der Kopplung erhalten wird.

11. Verfahren nach einem der Ansprüche 7 bis 10, dadurch gekennzeichnet, dass das andere optische Monomodeelement (2) ein Halbleiterlaser ist.

## Claims

1. Method of controlled modification of the geometrical characteristics of the end ($e_1$) of an optical monomode fiber (1), the fiber being formed of a central region (10) and at least one peripheral region (11-13) having different indices of optical refraction ($n_{10}$-$n_{13}$), these index differences being obtained by incorporation of at least one dopant into a base material at a determined percentage; the method being characterized in that it comprises the following steps:

a) previous preparation of the end ($e_1$) of said fiber in a manner to obtain a terminal face free from chips,

b) chemical attack of the end of the fiber during a predetermined time in a manner to cause differentiated speeds of the attack of these regions having determined dopant percentages,

c) neutralisation of the chemical attack,

d) injection of an optical guided radiation into the fiber through the other end and verification of the state of modification of said geometrical characteristics of the end of the fiber by determination of the variations of the remote field profile of said radiation radiated from said attacked end ($e_1$),

e) comparison of this remote field to a reference profile with which the best possible correlation is desired,

f) repetition of the steps b) to f) in case the time t has not been sufficient.

2. Method according to claim 1, characterized in that the optical fiber (1) being symmetrical about an axis of revolution ($\triangle_1$), the end face of this end is broken in oblique manner during the step of previous preparation of the end ($e_1$) of the fiber (1) to present an angle which is different from $\pi/2$ radians with the axis of symmetry ($\triangle_1$) in a manner to destory the symmetry of revolution of said controlled modification of the geometrical characteristics.

3. Method according to any of claims 1 or 2, characterized in that the remote field profile is compared to the reference profile to determine the overlapping integral of the two profiles, and in that the steps of chemical attack, neutralisation, determination of the remote field and comparison are repeated in iterative manner until the overlapping integral of these two profiles reaches a maximum.

4. Method according to any of claims 1 to 3, characterized in that the base material being silica and the main dopant being boron, the chemical attack is performed with a 40% solution of hydrofluoric acid, and in that the neutralisation of the attack is made by cleaning with the aid of a solution of water and alcohol.

5. Method according to any of claims 1 to 4, characterized in that the determination of the remote field is made by measurement of the optical intensity (I) of said radiation radiated by the attacked end ($e_1$) by means of an optoelectronic detector (5).

6. Method according to claim 5, characterized in that the optoelectronic detector is an array (60) of photodiodes ($D_{-n}$-$D_n$) which are equally spaced.

7. Method of coupling an optical monomode fiber (1) with another optical monomode element (2) the remote field profile of which is known, characterized in that the end ($e_1$) of the fiber (1) to be coupled is modified by the method of any of claims 1 to 6 and that the remote field profile of the fiber (B) is compared to that (C, D) of said monomode element to be coupled in a manner to adapt these two profiles to each other.

8. Method of coupling of an optical monomode fiber with another optical monomode element, characterized in that it comprises at least a first phase during which the end ($e_1$) of the fiber (1) to be coupled is modified according to the steps a) to d) of the method of any of claims 1 to 6 and a second phase wherein the optical monomode fiber (1) and the other optical monomode element (2) are moved in space one with respect to another in order to obtain a maximum optical coupling, the efficiency of this coupling being measured (5, 8).

9. Method according to claim 8, characterized in that the optical monomode fiber (1) and said other optical monomode element (2) are further placed from each other at a fixed pre-established distance (d).

10. Method according to any of claims 8 or 9, characterized in that the first and second phases are repeated in iterative manner until a maximum optical coupling efficiency is achieved.

11. Method according to any of claims 7 to 10, characterized in that the other optical monomode element (2) is a semiconductor laser.

Fig.1

Fig.2

Fig.3

Fig.4

Fig.5

Fig.6

Fig.7

Fig.8

Fig.9

Fig. 10

Fig. 11

Fig. 12

17